(19) Europäisches Patentamt
European Patent Office
Office européen des brevets

(11) Veröffentlichungsnummer : **0 110 305**
**B1**

# (12) EUROPÄISCHE PATENTSCHRIFT

(45) Veröffentlichungstag der Patentschrift : **05.03.86**

(51) Int. Cl.⁴ : **C 07 F 9/52**, C 07 F 9/42, C 07 F 9/34

(21) Anmeldenummer : **83111692.6**

(22) Anmeldetag : **23.11.83**

## (54) Verfahren zur Herstellung aromatischer Phosphor-Chlor-Verbindungen.

(30) Priorität : **27.11.82 DE 3244031**

(43) Veröffentlichungstag der Anmeldung : **13.06.84 Patentblatt 84/24**

(45) Bekanntmachung des Hinweises auf die Patenterteilung : **05.03.86 Patentblatt 86/10**

(84) Benannte Vertragsstaaten : **AT BE CH DE FR GB IT LI NL SE**

(56) Entgegenhaltungen :
**EP-A- 0 093 420**
**US-A- 3 244 745**
**SOVIET INVENTIONS ILLUSTRATED, Section Chemical, Derwent Publications Ltd., Woche K21, 6. Juli 1983, Section General Chemistry, Seite 3**
**G.M. KOSOLAPOFF et al.: "Organic phosphorus compounds", Band 4, 1972, Seite 95, John Wiley & Sons, Inc., New York, USA**

(73) Patentinhaber : **HOECHST AKTIENGESELLSCHAFT**
**Postfach 80 03 20**
**D-6230 Frankfurt am Main 80 (DE)**

(72) Erfinder : **Kleiner, Hans-Jerg, Dr.**
**Altkönigstrasse 11a**
**D-6242 Kronberg/Taunus (DE)**

**EP 0 110 305 B1**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

**Beschreibung**

Aromatische Phosphor-Chlor-Verbindungen wie z. B. Diphenylphosphinsäurechlorid $(C_6H_5)_2P(O)Cl$, Phenylphosphonsäuredichlorid $C_6H_5P(O)Cl_2$, Phenylthiophosphonsäuredichlorid $C_6H_5P(S)Cl_2$, Dichlor-phenyl-phosphan $C_6H_5PCl_2$, Chlor-diphenyl-phosphan $(C_6H_5)_2PCl$, etc. sind hauptsächlich Zwischenprodukte auf verschiedenen Sachgebieten wie dem Pharma-, Pflanzenschutz-, Farbstoff- und Polymerensektor.

Die Herstellung dieser Verbindungen kann nach einer Reihe bekannter Methoden erfolgen. So kann beispielsweise das Diphenylphosphinsäurechlorid $(C_6H_5)_2P(O)Cl$ auf übliche Weise aus Diphenylphosphinsäure $(C_6H_5)_2P(O)OH$ erhalten werden, die ihrerseits durch alkalischen Abbau des Triphenylphosphanoxids $(C_6H_5)_3PO$ zugänglich ist ; letzteres (Triphenylphosphanoxid) ist ein technisches Abfallprodukt, das insbesondere bei der sog. Wittig-Reaktion in nicht unerheblichen Mengen anfällt.

Phenylphosphonsäuredichlorid $C_6H_5P(O)Cl_2$ ist u. a. duch Phosgenierung von Phenylphosphonsäurediestern $C_6H_5P(O)(OR)_2$, worin R = organischer Rest, erhältlich ; Phenylphosphonsäurediester sind ihrerseits z. B. durch Umsetzung von Brombenzol mit Trialkylphosphiten in Gegenwart von Nickelbromid zugänglich.

Zu Phenylthiophosphonsäuredichlorid $C_6H_5P(S)Cl_2$ kommt man etwa — ausgehend von Dichlor-phenyl-phosphan $C_6H_5PCl_2$ — durch Schwefelung.

Dichlor-phenyl-phosphan $C_6H_5PCl_2$ und Chlor-diphenyl-phosphan $(C_6H_5)_2PCl$ entstehen etwa nach der Methode von K. Sommer (Zeitschrift für anorganische und allgemeine Chemie, *376* (1970) S. 39) nebeneinander durch Umsetzung von Triphenylphosphan $(C_6H_5)_3P$ mit Phosphortrichlorid $PCl_3$ bei Temperaturen um 280 °C unter Druck, gegebenenfalls unter Zusatz von $AlCl_3$ als Katalysator. Es wurde auch bereits vorgeschlagen (EP-A-0 093 420), Dichlor-phenyl-phosphan und Chlor-diphenyl-phosphan durch Umsetzung von Triphenylphosphan und Phosphortrichlorid bei Temperaturen zwischen etwa 320 und 700 °C herzustellen, wobei im Temperaturbereich zwischen etwa 320 und 500 °C vorteilhaft unter erhöhtem Druck, im Temperaturbereich zwischen etwa 500 und 700 °C vorteilhaft unter Normaldruck gearbeitet wird.

Die Verfahren des Standes der Technik zur Herstellung aromatischer Phosphor-Chlor-Verbindungen sind zwar zumindest teilweise recht brauchbare Verfahren (wie insbesondere dasjenige zur Herstellung von Dichlor-phenyl-phosphan und Chlor-diphenyl-phosphan gemäß EP-A-0 093 420), doch sind die dafür notwendigen Ausgangsprodukte nicht immer einfach und billig zugänglich.

In dem Bestreben, die Verfahren des Standes der Technik zur Herstellung aromatischer Phosphor-Chlor-Verbindungen insbesondere hinsichtlich der Wahl einfacherer und billigerer Ausgangsprodukte zu verbessern, wurde nun gefunden, daß dieses Ziel durch Umsetzung von Triphenylphosphanoxid oder -sulfid mit Phosphortrichlorid sowie Umsetzung der dabei entstehenden Primärprodukte erreicht wird.

Erfindungsgegenstand ist daher ein Verfahren zur Herstellung aromatischer Phosphor-Chlor-Verbindungen, das dadurch gekennzeichnet ist, daß man Sauerstoff oder Schwefel enthaltende aromatische Phosphorverbindungen — nachfolgend als Phosphanoxide oder -sulfide bezeichnet — der Formel I :

$$(C_6H_5)_m\overset{\overset{X}{\|}}{P}\,Cl_{3-m} \qquad (I)$$

worin

X = 0 oder S, vorzugsweise = 0, und

m = 1, 2 oder 3,

mit Phosphor-Chlor-Verbindungen der Formel II

$$(C_6H_5)_{3-n}PCl_n \qquad (II)$$

worin n = 1, 2 oder 3 bei Temperaturen zwischen etwa 330 und 700 °C umsetzt, wobei Produktgemische aus Verbindungen entstehen, die sich von den Verbindungen der Formel I durch Ersatz einer oder — soweit vorhanden — mehrerer $C_6H_5$-Gruppen durch Cl und von Verbindungen der Formel II durch Ersatz eines Cl-Atoms oder — soweit vorhanden — mehrerer Cl-Atome durch $C_6H_5$-Gruppen ableiten.

Die unter die Formel I fallenden Phosphanoxide und -sulfide enthalten mindestens einen an den Phosphor gebundenen Phenylrest ; die Verbindungen sind :

für X = 0

bei m = 3 : Triphenylphosphanoxid $(C_6H_5)_3P = 0$

bei m = 2 : Diphenylphosphinsäurechlorid 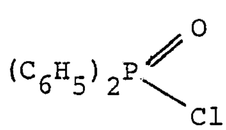

bei m = 1 : Phenylphosphonsäuredichlorid 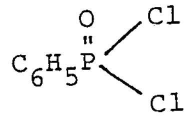

für X = S
bei m = 3 : Triphenylphosphansulfid $(C_6H_5)_3P = S$

bei m = 2 : Diphenylthiophosphinsäurechlorid 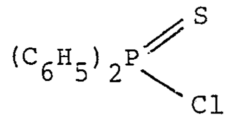

bei m = 1 : Phenylthiophosphonsäuredichlorid 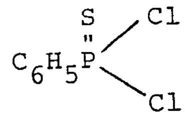

Bevorzugte Verbindungen I sind diejenigen mit X = 0 (Phosphanoxide). Besonders bevorzugte Verbindung I ist Triphenylphosphanoxid $(C_6H_5)_3PO$ ; diese Verbindung stellt ein in erheblichem Umfang anfallendes technisches Abfallprodukt (vor allem der Wittig-Reaktion) dar.

Die anderen Verbindungen der Formel I mit X = 0 und m = 2 sowie m = 1 können dann u. a. durch die erfindungsgemäße Umsetzung von Triphenylphosphanoxid mit Phosphortrichlorid erhalten werden.

Triphenylphosphansulfid $(C_6H_5)_3PS$ ist z. B. durch Schwefelung von Triphenylphosphan in bekannter Weise zugänglich. Die Verbindungen der Formel I mit X = S und m = 2 sowie m = 1 können in analoger Weise die entsprechenden Sauerstoffverbindungen z. B. durch die erfindungsgemäße Umsetzung des Triphenylphosphansulfids mit Phosphortrichlorid erhalten werden.

Die unter die Formel II fallenden Phosphor-Chlor-Verbindungen sind :
bei n = 3 : Phosphortrichlorid $PCl_3$
bei n = 2 : Dichlor-phenyl-phosphan $C_6H_5PCl_2$
bei n = 1 : Chlor-diphenyl-phosphan $(C_6H_5)_2PCl$

Bevorzugte Verbindung II ist Phosphortrichlorid $PCl_3$ ; sie ist ein bekanntes, in großen Mengen verfügbares Handelsprodukt. Es ist vorteilhaft, für die erfindungsgemäße Umsetzung das Phosphortrichlorid in frisch destillierter Form zu verwenden.

Die Verbindungen der Formel II mit n = 2 und n = 1 können zwar — wie anfangs erwähnt — etwa durch Umsetzung von Triphenylphosphan mit Phosphortrichlorid erhalten werden ; günstiger ist jedoch die Herstellung auf die erfindungsgemäße Weise aus Triphenylphosphanoxid und Phosphortrichlorid.

Für die Durchführung des erfindungsgemäßen Verfahrens werden die Phosphanoxide oder -sulfide I und die Phosphor-Chlor-Verbindungen II zweckmäßig im Molverhältnis von etwa 1 : 1 bis 4 eingesetzt. Überschüsse etwa der Verbindungen I sowie Überschüsse der Verbindungen II über das Molverhältnis etwa 1 : 4 hinaus sind jedoch ebenfalls möglich.

Im unteren Teil des Temperaturbereichs des erfindungsgemäßen Verfahrens — bei etwa 330 bis 500 °C — sind Temperaturen zwischen etwa 360 und 460 °C bevorzugt.

Bei dieser Verfahrensvariante wird vorzugsweise unter Überdruck, insbesondere unter dem sich in einem geschlossenen Reaktionsgefäß einstellenden (autogenen) Druck (in der Regel zwischen etwa 5 und 100 bar) gearbeitet.

Die Reaktionszeit liegt hier durchweg zwischen etwa 1 und 80 Stunden, wobei die kürzeren Reaktionszeiten bei den höheren Temperaturen und die längeren Reaktionszeiten bei den tieferen Temperaturen zweckmäßig sind.

Im oberen Teil des Temperaturbereichs des erfindungsgemäßen Verfahrens — bei etwa 500 bis 700 °C — liegen die bevorzugten Temperaturen zwischen etwa 500 und 600 °C.

Bei dieser Verfahrensvariante wird bevorzugt unter Normal-druck gearbeitet, und zwar zweckmäßig so, daß man das — zur besseren Löslichkeit ggf. auf etwa 60 °C erwärmte — Gemisch des Phosphanoxids oder -sulfids der Formel I mit der P-Cl-Verbindung der Formel II mit Hilfe einer Dosiervorrichtung in die auf Reaktionstemperatur geheizte Reaktionszone (z. B. ein elektrisch geheiztes Rohr) eindosiert. Hierbei kann auch das Hindurchleiten eines mit den Ausgangs- und Endprodukten nicht reagierenden Gasstroms (z. B. Stickstoff, Argon, aber auch Chlorwasserstoff) von Vorteil sein.

Die Reaktionszeiten liegen hier praktisch nur in der Größenordnung von Sekunden.

Bei beiden vorerwähnten Verfahrensvarianten, die sich sowohl für eine diskontinuierliche als auch eine kontinuierliche Fahrweise eignen, wird in der Regel destillativ aufgearbeitet.

Bei beiden Verfahrensvarianten können auch verschiedene Metallverbindungen als Katalysatoren zugesetzt werden. Als solche eignen sich z. B. die Halogenide, Carbonate, Acetate etc. der folgenden Metalle : Alkalimetalle, Erdalkalimetalle, Aluminium, Zinn, Blei, Kupfer, Silber, Eisen, Kobalt, Nickel etc. Bevorzugt sind Blei-, Kupfer-, Silber- und Nickel-Verbindungen.

Die Katalysatormenge beträgt normalerweise zwischen etwa 0,1 und 2 Gew.-%, bevorzugt zwischen etwa 0,3 und 0,8 Gew.-%, bezogen auf das eingesetzte Phosphanoxid oder -sulfid der Formel I.

Das erfindungsgemäße Verfahren liefert normalerweise ein Gemisch verschiedener aromatischer P-Cl-Verbindungen, die destillativ trennbar sind. Als Hauptprodukte entstehen in der Regel aus den Phosphanoxiden oder -sulfiden der Formel I die durch den Ersatz einer und (wenn vorhanden) zweier Phenylgruppen durch Chlor gebildeten Phosphorderivate

und aus den P-Cl-Verbindungen der Formel II die durch Ersatz eines Chloratoms durch die Phenylgruppe gebildeten Phosphorverbindungen :

$$(C_6H_5)_m\overset{X}{\overset{\|}{P}}Cl_{3-m} \quad (I) \longrightarrow (C_6H_5)_{m-1}\overset{X}{\overset{\|}{P}}Cl_{4-m} + (C_6H_5)_{m-2}\overset{X}{\overset{\|}{P}}Cl_{5-m}$$

(X = O, S; m= 1,2,3)  falls m = 2 oder 3)

$$(C_6H_5)_{3-n}P\,Cl_n \quad (II) \longrightarrow (C_6H_5)_{4-n}P\,Cl_{n-1}$$

(n = 1, 2, 3)

Für den bevorzugten Fall des Einsatzes von Triphenylphosphanoxid als Ausgangsverbindung I und von Phosphortrichlorid als Ausgangsverbindung II bedeutet dies die Bildung von Diphenylphosphinsäurechlorid, Phenylphosphonsäuredichlorid und Dichlor-phenyl-phosphan als Hauptprodukten :

$$(C_6H_5)_3P = O \quad (I) \longrightarrow (C_6H_5)_2\overset{O}{\overset{\|}{P}}Cl + C_6H_5\overset{O}{\overset{\|}{P}}Cl_2$$

Diphenylphosphinsäurechlorid; Phenylphosphonsäuredichlorid

$$PCl_3 \quad (II) \longrightarrow C_6H_5P\,Cl_2$$

Dichlor-phenyl-phosphan

Das Molverhältnis der Ausgangsprodukte, die Temperatur- und Druckbedingungen im einzelnen, sowie die Reaktionszeit und der ggf. verwendete Katalysator besitzen auf die Zusammensetzung des Reaktionsprodukts einen nicht unerheblichen Einfluß.

Die Bildung eines Produktgemisches beim erfindungsgemäßen Verfahren ist dadurch zu erklären, daß die aus den Ausgangsverbindungen I und II zunächst gebildeten Reaktionsprodukte ihrerseits wieder mit den Ausgangsprodukten reagieren können ; die dabei gebildeten Produkte können sich dann gegebenenfalls wieder mit den ursprünglichen Ausgangsprodukten oder mit den ursprünglichen Endprodukten umsetzen usw. Die folgende Auflistung der wohl wesentlichsten der ziemlich vielfältigen Reaktionsmöglichkeiten mag das beim erfindungsgemäßen Verfahren entstehende Verbindungsgemisch verständlich erscheinen lassen :

$$(C_6H_5)_3\overset{X}{\overset{\|}{P}} + PCl_3 \longrightarrow (C_6H_5)_2\overset{X}{\overset{\|}{P}}Cl + C_6H_5P\,Cl_2 \qquad (A)$$

$$(C_6H_5)_3\overset{X}{\overset{\|}{P}} + 2\,PCl_3 \longrightarrow C_6H_5\overset{X}{\overset{\|}{P}}Cl_2 + 2\,C_6H_5P\,Cl_2 \qquad (B)$$

$$(C_6H_5)_3\overset{X}{\overset{\|}{P}} + 3\ PCl_3 \longrightarrow \overset{X}{\overset{\|}{P}}Cl_3 + 3\ C_6H_5PCl_2 \qquad (C)$$

$$(C_6H_5)_3\overset{X}{\overset{\|}{P}} + C_6H_5PCl_2 \longrightarrow (C_6H_5)_2\overset{X}{\overset{\|}{P}}Cl + (C_6H_5)_2PCl \qquad (D)$$

$$(C_6H_5)_3\overset{X}{\overset{\|}{P}} + (C_6H_5)_2PCl \longrightarrow (C_6H_5)_2\overset{X}{\overset{\|}{P}}Cl + (C_6H_5)_3P \qquad (E)$$

$$(C_6H_5)_2\overset{X}{\overset{\|}{P}}Cl + PCl_3 \longrightarrow C_6H_5\overset{X}{\overset{\|}{P}}\ Cl_2 + C_6H_5P\ Cl_2 \qquad (F)$$

$$(C_6H_5)_2\overset{X}{\overset{\|}{P}}Cl + C_6H_5P\ Cl_2 \longrightarrow C_6H_5\overset{X}{\overset{\|}{P}}Cl_2 + (C_6H_5)_2\ PCl \qquad (G)$$

$$(C_6H_5)_2\overset{X}{\overset{\|}{P}}Cl \pm (C_6H_5)_2P\text{-}Cl \longrightarrow C_6H_5\overset{X}{\overset{\|}{P}}\ Cl_2 + (C_6H_5)_3P \qquad (H)$$

$$C_6H_5\overset{X}{\overset{\|}{P}}\ Cl_2 + P\ Cl_3 \longrightarrow \overset{X}{\overset{\|}{P}}\ Cl_3 + C_6H_5P\ Cl_2 \qquad (I)$$

$$C_6H_5\overset{X}{\overset{\|}{P}}Cl_2 + C_6H_5P\ Cl_2 \longrightarrow \overset{X}{\overset{\|}{P}}\ Cl_3 + (C_6H_5)_2P\text{-}Cl \qquad (J)$$

Insbesondere wegen der Möglichkeit, aus dem anderweitig kaum sinnvoll verwertbaren technischen Abfallprodukt Triphenylphosphanoxid $(C_6H_5)_3PO$ nach dem erfindungsgemäßen Verfahren in einfacher Weise zu einer Reihe wertvoller aromatischer P-Cl-Verbindungen — vor allem Diphenylphosphinsäurechlorid, Phenylphosphonsäuredichlorid, Dichlor-phenyl-phosphan und Chlor-diphenyl-phosphan — zu gelangen, stellt die Erfindung einen erheblichen Fortschritt auf diesem Gebiet dar.

Das Gelingen der erfindungsgemäßen Umsetzung war außerordentlich überraschend, weil nämlich bisher kaum — oder jedenfalls nur sehr wenige — Reaktionen des ziemlich reaktionsträgen Triphenylphosphanoxids (und auch des Sulfids) bekannt sind, bei denen die Phenylgruppe in definierter Weise durch andere Gruppen ersetzt werden kann. Mit der erfindungsgemäßen Reaktion vergleichbare Reaktionen des Triphenylphosphanoxids und -sulfids sind jedenfalls bisher noch nicht beschrieben worden. Außerdem war überraschend, daß nach dem erfindungsgemäßen Verfahren nicht — wie man aufgrund der vielfältigen Weiterreaktionsmöglichkeiten der primären Reaktionsprodukte vermuten könnte (siehe die vorstehenden Formelgleichungen A bis J) — ein kaum brauchbares Gemisch einer Vielzahl von Verbindungen in jeweils nur geringen Mengen entsteht, sondern daß man praktisch immer nur zwei oder drei aromatische P-Cl-Verbindungen als Hauptprodukte, und weitere Folgeprodukte in teilweise nur weit untergeordneter Menge erhält.

Die Erfindung wird nun durch die nachfolgenden Beispiele näher erläutert :

Beispiel 1

20 g (= 0,072 mol) Triphenylphosphanoxid und 40 g (= 0,291 mol) Phosphortrichlorid wurden bei ca. 360 °C in einem Bombenrohr ca. 20 Stunden gehalten. Nach der Destillation im Vakuum (ohne Kolonne) wurden — neben nicht umgesetztem Phosphortrichlorid — 29 g eines Destillats erhalten, das aufgrund eines $^{31}$P-NMR-Spektrums folgende Zusammensetzung aufwies :

17,1 Gew.-% Diphenylphosphinsäurechlorid
20,3 Gew.-% Phenylphosphonsäuredichlorid
3,4 Gew.-% Triphenylphosphanoxid
52,5 Gew.-% Dichlor-phenyl-phosphan
4,1 Gew.-% Chlor-diphenyl-phosphan und
2,6 Gew.-% Triphenylphosphan

Bei einem 95 %igen Umsatz betrug die Ausbeute 31 % gemäß der vorstehenden Reaktionsgleichung A und 45 % gemäß Reaktionsgleichung B. Ohne Berücksichtigung des in geringeren Mengen anfallenden Chlor-diphenyl-phosphans betrug die Gesamtausbeute damit 76 % d. Th.

Nach dem Muster dieses Beispiels wurde eine Reihe weiterer Beispiele (Nr. 2-16) durchgeführt, deren Details aus den Tabellen 1 und 2 ersichtlich sind. Die Daten des Beispiels 1 wurden in die Tabellen mit aufgenommen.

In dem dann noch anschließenden Beispiel (Nr. 17) wurde im oberen Teil des Temperaturbereichs des erfindungsgemäßen Verfahrens bei Normaldruck gearbeitet.

(Siehe Tabellen Seite 7 ff.)

Tabelle 1 : Ausgangs-Reaktionskomponenten und Reaktionsbedingungen

| Beisp. Nr. | Ausgangsverbindung I | Eingesetzte Menge | Ausgangsverbindung II | Eingesetzte Menge | Reaktionstemp. | Druck | Reaktionszeit | Katalysator |
|---|---|---|---|---|---|---|---|---|
| 1 | $(C_6H_5)_3P = 0$ | 20 g = 0,072 mol | $PCl_3$ | 40 g = 0,291 mol | ca. 360 °C | autogen | ca. 20 h | — |
| 2 | " | " | " | " | ca. 420-430 °C | " | ca. 3 " | — |
| 3 | " | " | " | " | ca. 360 °C | " | ca. 80 " | — |
| 4 | " | 40 g = 0,144 mol | " | 20 g = 0,146 mol | " | " | ca. 20 " | 100 mg $NiBr_2$ |
| 5 | " | 20 g = 0,072 mol | " | 40 g = 0,291 mol | " | " | " " | 100 mg $PbCl_2$ |
| 6 | " | " | " | " | " | " | " " | " " AgCl |
| 7 | " | " | " | " | " | " | " " | " " CuCl |
| 8 | " | " | " | " | " | " | " " | " " $NiBr_2$ |
| 9 | " | " | " | " | " | " | " " | " " $BeCl_2$ |
| 10 | " | " | " | " | " | " | " " | " " $BaCO_3$ |
| 11 | " | " | " | " | ca. 420-430 °C | " | 2 " | " " AgCl |
| 12 | " | " | $C_6H_5PCl_2$ | 40 g = 0,224 mol | ca. 360 °C | " | ca. 20 " | — |
| 13 | " | " | $(C_6H_5)_2PCl$ | 40 g = 0,181 mol | ca. 370 °C | " | ca. 2 " | — |
| 14 | $(C_6H_5)_2P(O)Cl$ | 20 g = 0,085 mol | $PCl_3$ | 40 g = 0,291 mol | ca. 360-370 °C | " | " " | — |
| 15 | " | " | $C_6H_5P\ Cl_2$ | 40 g = 0,224 mol | ca. 420-430 °C | " | " " | — |
| 16 | $(C_6H_5)_3P = S$ | 20 g = 0,068 mol | $PCl_3$ | 40 g = 0,291 mol | ca. 430 °C | " | ca. 20 " | 100 mg $BeCl_2$ |

Tabelle 2 : Reaktionsprodukt (Destillat)

| Beisp. Nr. | Menge | Zusammensetzung (% = Gew.-%) | | | | | | Ausbeute |
|---|---|---|---|---|---|---|---|---|
| | | $(C_6H_5)_2P(O)Cl$ | $C_6H_5P(O)Cl_2$ | $(C_6H_5)_3P = 0$ | $C_6H_5P\ Cl_2$ | $(C_6H_5)_2PCl$ | $(C_6H_5)_3P$ | |
| 1 | 29 g | 17,1 % | 20,3 % | 3,4 % | 52,5 % | 4,1 % | 2,6 % | 1) |
| 2 | 31 g | 8,0 % | 26,2 % | — | 62,9 % | 2,2 % | — | |
| 3 | 32 g | 10,8 % | 25,9 % | — | 59,3 % | 2,9 % | — | |
| 4 | 49 g | 32 % | 10,4 % | 5,2 % | 35,8 % | 11,6 % | 5,0 % | |
| 5 | 29 g | 6,4 % | 23,8 % | — | 66,6 % | 3,2 % | — | |
| 6 | 30,5 g | 8,6 % | 22,4 % | — | 64,2 % | 3,1 % | 0,3 % | |
| 7 | 29 g | 8,8 % | 23,1 % | — | 62,9 % | 3,9 % | — | |
| 8 | 31 g | 10,6 % | 22,7 % | — | 61,7 % | 4,8 % | — | |
| 9 | 28 g | 14,1 % | 19,3 % | — | 60,4 % | 4,3 % | 1,2 % | |
| 10 | 30 g | 12,4 % | 20,1 % | — | 60,3 % | 3,7 % | 1,0 % | |
| 11 | 30 g | 15,9 % | 20,9 % | — | 54,4 % | 5,2 % | 1,3 % | |
| 12 | 54 g | 20,4 % | 2,9 % | — | 43,5 % | 28,2 % | 4,1 % | 2) |
| 13 | 52 g | 17,0 % | 7,2 % | 0,8 % | 5,6 % | 38,8 % | 30,1 % | 3) |
| 14 | 22 g | 33,3 % | 32,3 % | — | 32,4 % | 1,5 % | — | 4) |
| 15 | 40 g | 26,6 % | 11,3 % | 0,6 % | 40,9 % | 16,9 % | 0,7 % | 5) |
| | | $(C_6H_5)_2P(S)Cl$ | $C_6H_5P(S)Cl_2$ | $(C_6H_5)_3P = S$ | $(C_6H_5)_2PCl$ | $C_6H_5PCl_2$ | $(C_6H_5)_3P$ | |
| 16 | 25 g | 23,7 % | 15,1 % | — | 53,6 % | 1,0 % | — | 6) |

Beispiel 17

100 g (= 0,513 mol) Phenylphosphonsäuredichlorid und 200 g (= 1,45 mol) Phosphortrichlorid wurden gemischt. Diese Mischung wurde während 3 Stunden eingetropft in ein senkrecht stehendes, 60 cm langes, mit Quarz-Raschingringen von 6 mm Durchmesser gefülltes, mit Stickstoff gespültes Quarzrohr, das sich in einem auf 600 °C geheizten elektrischen Ofen befand. Das sich in der Vorlage sammelnde Reaktionsgemisch wurde erneut während 2 Stunden in das Quarzrohr bei 600 °C eingetropft. Das nun anfallende Reaktionsgemisch wurde im Vakuum destilliert. Neben nicht umgesetztem Phosphortrichlorid und Phosphoroxychlorid wurden 80 g eines Destillats erhalten, das aufgrund eines $^{31}$P-NMR-Spektrums folgende Zusammensetzung aufwies :

77,9 Gew.-% Phenylphosphonsäuredichlorid

15,5 Gew.-% Dichlor-phenyl-phosphan

Bei einem 36 %igem Umsatz betrug die Ausbeute gemäß Reaktionsgleichung I 38 % d. Th.

Die Ziffern in der Spalte — Ausbeute — besitzen folgende Bedeutung :

1. bei 95 %igem Umsatz Ausbeute 31 % gemäß Reaktionsgleichung A und 45 % gemäß Reaktionsgleichung B Gesamtausbeute (ohne Berücksichtigung des in geringerer Menge anfallenden Chlor-diphenyl-phosphans) 76 % d. Th.
2. Ausbeute gemäß Reaktionsgleichung D 96 % d. Th. an Chlor-diphenyl-phosphan.
3. Ausbeute an Triphenylphosphan gemäß Reaktionsgleichung E 83,5 % d. Th.
4. Ausbeute gemäß Reaktionsgleichung F bei 63 %igem Umsatz 75 % d. Th.
5. Ausbeute an Chlor-diphenyl-phosphan gemäß Reaktionsgleichung G bei ca. 50 %igem Umsatz 73 % d. Th.
6. Gesamtausbeute 60 % d. Th.

## Patentansprüche

1. Verfahren zur Herstellung aromatischer Phosphor-Chlor-Verbindungen, dadurch gekennzeichnet, daß man Phosphanoxide oder -sulfide der Formel I

$$(C_6H_5)_m\overset{\overset{X}{\|}}{P}\,Cl_{3-m} \qquad (I)$$

worin

X = 0 oder S, vorzugsweise = 0 und

m = 1, 2 oder 3,

mit Phosphor-Chlor-Verbindungen der Formel II

$$(C_6H_5)_{3-n}PCl_n \qquad (II)$$

worin n = 1, 2 oder 3 bei Temperaturen zwischen etwa 330 und 700 °C umsetzt, wobei Produktgemische aus Verbindungen entstehen, die sich von den Verbindungen der Formel I durch Ersatz einer oder — soweit vorhanden — mehrerer $C_6H_5$-Gruppen durch Cl und von den Verbindungen der Formel II durch Ersatz eines Cl-Atoms oder — soweit vorhanden — mehrerer Cl-Atome durch $C_6H_5$-Gruppen ableiten.

2. Verfahren nach Anspruch 1, dadurch gekennzeichnet, daß man als Verbindung der Formel I Triphenylphosphanoxid $(C_6H_5)_3PO$ und als Verbindung der Formel II Phosphortrichlorid $PCl_3$ verwendet.

3. Verfahren nach Ansprüchen 1 bis 2, dadurch gekennzeichnet, daß man die Verbindungen der Formeln I und II im Molverhältnis von etwa 1 zu (1-4) einsetzt.

4. Verfahren nach den Ansprüchen 1 bis 3, dadurch gekennzeichnet, daß man die Umsetzung im Temperaturbereich zwischen etwa 330 und 500 °C unter erhöhtem Druck, insbesondere unter autogenem Druck, durchführt.

5. Verfahren nach den Ansprüchen 1 bis 3, dadurch gekennzeichnet, daß man die Umsetzung im Temperaturbereich zwischen etwa 500 und 600 °C unter Normaldruck durchführt.

## Claims

1. A process for the preparation of aromatic phosphorus-chlorine compounds, characterized in reacting phosphine oxides or sulfides of the formula I

$$(C_6H_5)_m\overset{\overset{X}{\|}}{P}\,Cl_{3-m} \qquad (I)$$

in which

X = 0 or S, preferably = 0,

and m = 1, 2 or 3,

with phosphorus-chlorine compounds of the formula II

$$(C_6H_5)_{3-n}PCl_n \qquad (II)$$

in which n = 1, 2 or 3, at temperatures between about 330 and 700 °C, whereby mixtures of compounds are formed, which are derived from the compounds of formula I by substitution of one or — if present — more $C_6H_5$-groups with Cl and from the compounds of formula II by substitution of one Cl-atom or — if present — more Cl-atoms with $C_6H_5$-groups.

2. The process as claimed in Claim 1, characterized in using triphenylphosphine oxide $(C_6H_5)_3PO$ as the compound of the formula I, and phosphorus trichloride $PCl_3$ as the compound of the formula II.

3. The process as claimed in either of Claims 1 or 2, characterized in employing the compounds of the formulae I and II in a molar ratio of about 1 to (1-4).

4. The process as claimed in any of Claims 1 to 3, characterized in carrying out the reaction in the temperature range between about 330 and 500 °C under elevated pressure, in particular under autogenous pressure.

5. The process as claimed in any of Claims 1 to 3, characterized in carrying out the reaction in the temperature range between about 500 and 600 °C under normal pressure.

**Revendications**

1. Procédé de préparation de composés aromatiques à la fois chlorés et phosphorés, procédé caractérisé en ce qu'on fait réagir des oxydes ou des sulfures de phosphanes répondant à la formule I :

$$(C_6H_5)_m\overset{\overset{X}{\|}}{P}\,Cl_{3-m} \qquad (I)$$

dans laquelle

X représente 0 ou S, de préférence 0,

et m est égal à 1, à 2 ou à 3)

avec des composés chlorophosphorés répondant à la formule II :

$$(C_6H_5)_{3-n}PCl_n \qquad (II)$$

(dans laquelle n est égal à 1, à 2 ou à 3), à des températures comprises entre environ 330 et 700 °C, cette réaction donnant naissance à des mélanges de composés qui dérivent des composés de formule I par remplacement d'un ou, s'il y en a plus d'un, de plusieurs radicaux $-C_6H_5$ par Cl, et des composés de formule II par remplacement d'un atome de chlore ou, s'il y en a plus d'un, de plusieurs atomes de chlore par des radicaux $-C_6H_5$.

2. Procédé selon la revendication 1 caractérisé en ce qu'on utilise, comme composé de formule I, l'oxyde de triphénylphosphane $(C_6H_5)_3PO$ et, comme composé de formule II, le trichlorure de phosphore $PCl_3$.

3. Procédé selon l'une des revendications 1 et 2, caractérisé en ce que les composés de formules I et II sont mis en jeu dans un rapport molaire compris entre environ 1 : 1 et 1 : 4.

4. Procédé selon l'une quelconque des revendications 1 à 3, caractérisé en ce qu'on effectue la réaction dans l'intervalle de température allant d'environ 330 à 500 °C et sous pression élevée, plus particulièrement sous la pression autogène.

5. Procédé selon l'une quelconque des revendications 1 à 3, caractérisé en ce qu'on effectue la réaction dans l'intervalle de température allant d'environ 500 à 600 °C et sous la pression normale.